# DEMANDE DE BREVET EUROPEEN

(11) **EP 3 964 884 A1**
(43) Date de publication de la demande: **09.03.2022**
(21) Numéro de dépôt: 21194875.7
(22) Date de dépôt: 03.09.2021
(51) Int. Cl.: G02C 5/22

(54) **DISPOSITIF DE FIXATION POUR MONTURE DE LUNETTES**

(30) Priorité: 04.09.2020 FR 2009011
(71) Demandeur: F & H, 69009 Lyon (FR)
(72) Inventeur: BRUSSET, Sébastien, 69270 Fontaines-Sur-Saône (FR)
(74) Mandataire: Novaimo

(57) **Abrégé**

Dispositif de fixation (10) pour monture de lunettes (5), caractérisé en ce qu'il comprend :
- un premier élément (11) comprenant une première ouverture (13), le premier élément (11) étant aimanté,
- un deuxième élément (12) comprenant une deuxième ouverture (14), le deuxième élément (12) étant un élément magnétique, et
- un élément de liaison (15) logé dans la première ouverture et dans la deuxième ouverture (13, 14) de sorte à relier mécaniquement le premier élément (11) au deuxième élément (12), l'élément de liaison (15) étant un élément magnétique.

## Description

L'invention concerne un dispositif de fixation pour monture de lunettes. L'invention porte aussi sur une monture de lunettes comprenant au moins un tel dispositif de fixation. L'invention porte encore sur une paire de lunettes comprenant une telle monture de lunettes et/ou au moins un tel dispositif de fixation. L'invention porte également sur un procédé d'assemblage ou de montage d'un tel dispositif de fixation. L'invention porte enfin sur un procédé de démontage d'un tel dispositif de fixation.

Une paire de lunettes comprend généralement une monture de lunettes comprenant généralement une face avant apte à recevoir notamment deux verres. La monture de lunettes comprend encore deux branches. Chaque branche est fixée par un moyen de fixation de chaque côté de la face avant. Notamment, afin de limiter l'encombrement de la paire de lunettes en dehors de l'utilisation de celle-ci, le moyen de fixation entre chaque branche et la face avant est de type charnière. Cela permet de « déplier » les deux branches pour utiliser la paire de lunettes et permet de « replier » les deux branches et de les amener sensiblement au contact de la face avant dans tous les autres cas. Généralement, cette charnière est un système de chape, l'axe de pivotement de la chape étant assuré par une vis. Pour des raisons esthétiques, de limitation d'encombrement et de masse d'une telle charnière, la vis est de très petit diamètre et de très faible longueur. Il en résulte une fragilité qui pose des problèmes de fiabilité dans le temps, notamment de type desserrage intempestif. En cas de dévissage total de la vis, la branche est désolidarisée de la face avant ce qui rend la paire de lunettes inutilisable. En outre, eu égard à la taille de la vis, le dévissage total de la vis entraîne fréquemment la perte de celle-ci. Enfin, les efforts résistants aux mouvements des branches ne sont pas pérennes et varient considérablement au fil du temps.

Au final, il existe une certaine complexité à assembler des branches sur une face avant d'une monture de lunettes quelles que soient les natures des composants assemblés.

Le but de l'invention est de fournir un dispositif de fixation de branche à une face avant de monture de lunettes remédiant aux inconvénients ci-dessus et améliorant les dispositifs de fixation connus de l'art antérieur. En particulier, l'invention permet de réaliser une liaison entre une branche latérale et une face avant de monture de lunettes simple, discrète et fiable tout en étant démontable.

Selon l'invention, le dispositif de fixation pour monture de lunettes comprend :
- un premier élément comprenant une première ouverture, le premier élément étant aimanté,
- un deuxième élément comprenant une deuxième ouverture, le deuxième élément étant un élément magnétique, et
- un élément de liaison logé dans la première ouverture et dans la deuxième ouverture de sorte à relier mécaniquement le premier élément au deuxième élément, l'élément de liaison étant un élément magnétique.

Le dispositif de fixation peut être une charnière, l'élément de liaison pouvant être un arbre cylindrique ou sensiblement cylindrique et/ou les première et deuxième ouvertures pouvant être des orifices cylindriques ou sensiblement cylindriques de sorte à permettre le pivotement du premier élément relativement au deuxième élément.

Le premier élément peut comprendre un aimant permanent ou être un aimant permanent.

Le premier élément peut avoir une forme annulaire, notamment une forme annulaire de révolution.

L'élément de liaison peut être un aimant permanent.

Le premier élément peut être un élément de face avant d'une monture de lunettes et le deuxième élément peut être un élément de branche d'une monture de lunettes.

Le premier élément peut être un élément de branche d'une monture de lunettes et le deuxième élément peut être un élément de face avant d'une monture de lunettes.

Selon l'invention, une monture de lunettes comprend une face avant et au moins une branche latérale, l'au moins une branche latérale étant reliée mécaniquement à la face avant par un dispositif de fixation défini précédemment.

Selon l'invention, une paire de lunettes comprend :
- une monture de lunettes définie précédemment, et/ou
- un dispositif de fixation défini précédemment.

Selon l'invention, un procédé d'assemblage ou de montage d'un dispositif de fixation défini précédemment, comprend les étapes suivantes :
- mettre en place l'élément de liaison dans le premier élément,
- mettre en place le deuxième élément contre le premier élément, l'élément de liaison se déplaçant en pénétrant dans la deuxième ouverture, sous l'effet de forces magnétiques, lorsque la deuxième ouverture se trouve en vis-à-vis de la première ouverture.

Selon l'invention, un procédé de démontage d'un dispositif de fixation défini précédemment, comprend les étapes suivantes :
- mettre en place un outil de démontage magnétique sur le premier élément ou à proximité du premier élément de sorte que sous l'effet de forces magnétiques, l'élément de liaison se déplace hors du deuxième élément,
- séparer le premier élément du deuxième élément.

Les figures annexées représentent, à titre d'exemple, un mode de réalisation d'un dispositif de fixation selon l'invention.

La figure 1 est une vue en perspective d'une paire de lunettes selon un mode de réalisation.

La figure 2 est une vue en perspective d'une branche d'une paire de lunettes, d'un premier élément et d'un élément de liaison d'un dispositif de fixation selon un mode de réalisation.

La figure 3 est une vue en coupe et en perspective du dispositif de fixation selon le mode de réalisation, selon un plan B passant par l'axe A du dispositif de fixation.

La figure 4 est une vue en coupe schématique selon le plan B du premier élément et de l'élément de liaison du dispositif de fixation selon le mode de réalisation.

La figure 5 est une vue en coupe schématique selon le plan B du dispositif de fixation selon le mode de réalisation.

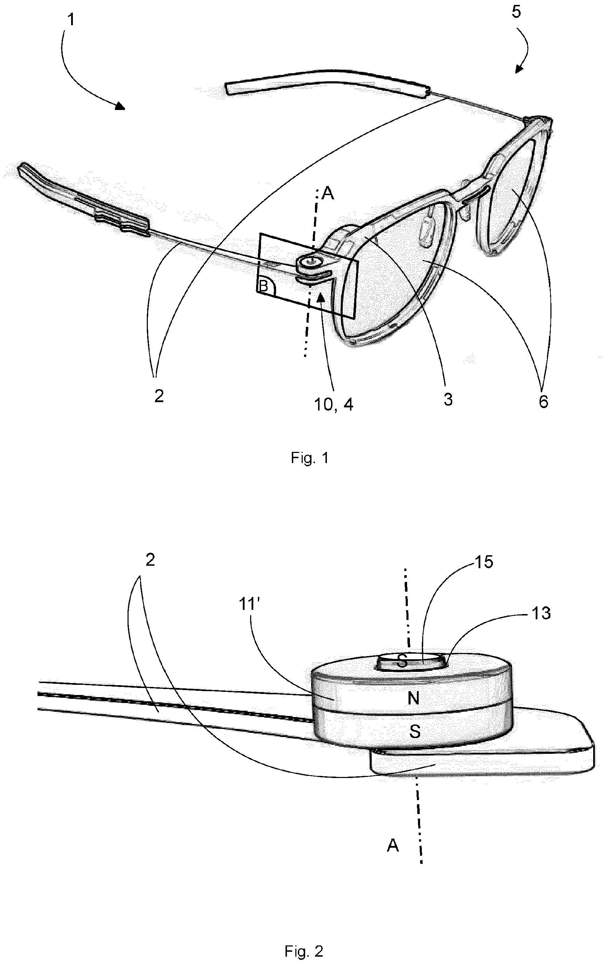

Un mode de réalisation d'une paire de lunettes 1 est illustré sur la figure 1. La paire de lunettes 1 comprend une monture de lunettes 5. Par « paire de lunettes », on entend l'assemblage d'une monture de lunettes 5 avec deux verres 6. La paire de lunettes 1 ou la monture de lunettes 5 comprend encore au moins une branche latérale 2, de préférence deux branches 2. La paire de lunettes 1 ou la monture de lunettes 5 comprend encore une face avant 3 de monture. La face avant 3 est destinée à positionner et/ou supporter les verres 6.

Comme illustré en particulier sur la figure 1, la paire de lunettes 1 ou la monture de lunettes 5 comprend encore un dispositif de fixation 10 assurant la fixation de la branche 2 sur la face avant 3. Ainsi, chaque branche latérale 2 est reliée mécaniquement à la face avant 3 par le dispositif de fixation 10.

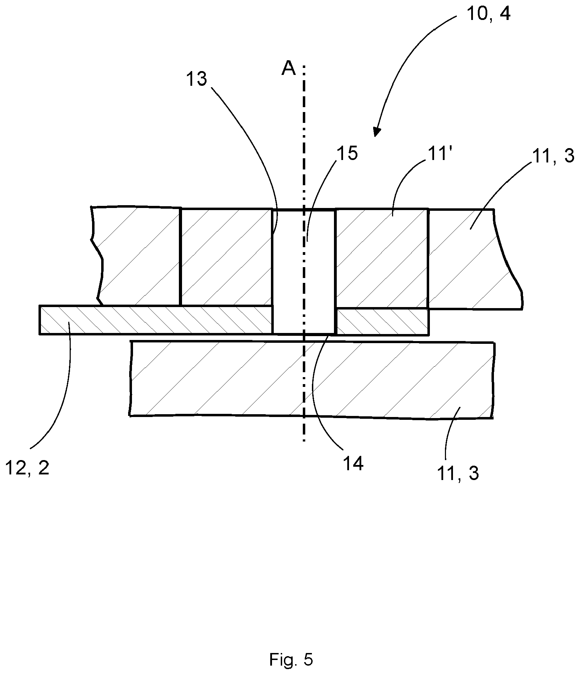

Plus précisément, comme illustré sur les figures 2 à 5, le dispositif de fixation 10 comprend un premier élément 11. Le premier élément 11 comprend une première ouverture 13 d'axe A. Avantageusement, le premier élément 11 est aimanté.

Le dispositif de fixation 10 comprend encore un deuxième élément 12. Le deuxième élément 12 comprend une deuxième ouverture 14 d'axe A. Avantageusement, le deuxième élément 12 est un élément magnétique.

De préférence, les première et deuxième ouvertures sont coaxiales ou sensiblement coaxiales.

Le dispositif de fixation 10 comprend encore un élément de liaison 15 logé dans la première ouverture 13 et dans la deuxième ouverture 14. Ainsi, l'élément de liaison 15 permet de relier mécaniquement le premier élément 11 au deuxième élément 12.

En effet, l'élément de liaison permet dans cette configuration engagée dans le premier élément et dans le deuxième élément de transmettre de l'un à l'autre des premier et deuxième éléments tout effort ou toute composante d'effort perpendiculaire à l'axe A. Ceci permet de verrouiller tout mouvement de translation (perpendiculaire à l'axe A) du premier élément relativement au deuxième élément.

Avantageusement, l'élément de liaison 15 est un élément magnétique.

De préférence, le dispositif de fixation 10 est une charnière 4. Autrement dit, l'élément de liaison 15 permet le pivotement du premier élément 11 relativement au deuxième élément 12. Ainsi, avantageusement, l'élément de liaison est par exemple un arbre cylindrique ou sensiblement cylindrique d'axe A et/ou les première et deuxième ouvertures 13, 14 sont des orifices cylindriques ou sensiblement cylindriques d'axes confondus ou sensiblement confondus avec l'axe A. Avantageusement, les diamètres des orifices 13, 14 et le diamètre de l'arbre cylindrique 15 sont tels qu'un jeu réside entre l'arbre et les orifices afin de permettre le pivotement.

De préférence, une force magnétique de rappel du premier élément 11 sur le deuxième élément 12 et le coefficient de frottement du premier élément 11 sur le deuxième élément 12 permettent de réaliser un couple de friction souhaité. En effet, le premier élément aimanté 11 crée une force magnétique plaquant le deuxième élément sur le premier élément.

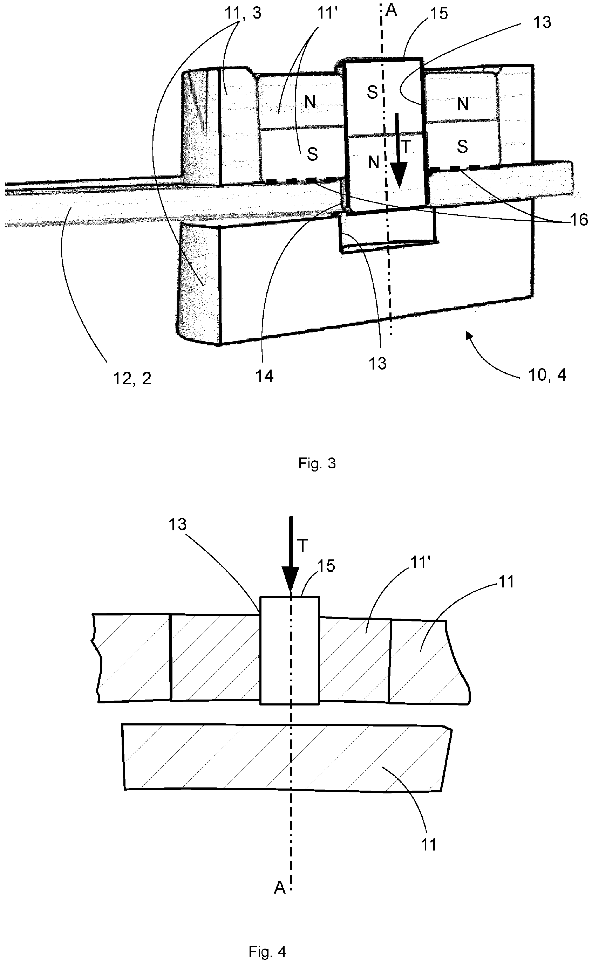

La zone de frottements ou contact 16, illustrée en pointillée sur la figure 3, peut être définie selon le couple souhaité de pivotement de la branche par rapport à la face avant. En d'autres termes, l'interface entre le premier élément et le deuxième élément est définie selon le couple résistant recherché. Cette définition peut être obtenue par des paramètres dimensionnels de la zone de contact à l'interface et/ou par des paramètres d'état des surfaces et/ou par la nature des matériaux des surfaces en contact.

Comme illustré en particulier sur la figure 3, le premier élément 11 comprend, ou est, un aimant permanent 11'. De préférence, comme illustré sur les figures 2 et 3, le premier élément 11 a une forme annulaire, par exemple une forme annulaire de révolution, par exemple d'axe de révolution confondu ou sensiblement confondu avec l'axe A. Sur la figure 3, l'aimant est représenté avec un pôle nord (N) en partie supérieure et un pôle sud (S) en partie inférieure.

Par exemple, l'élément de liaison 15 est un aimant permanent. Sur la figure 3, l'élément de liaison est représenté avec un pôle sud (S) en partie supérieure et un pôle nord (N) en partie inférieure.

Selon le mode de réalisation illustré, le premier élément 11 est un élément de la face avant 3 de la monture de lunettes 5. Le deuxième élément 12 est alors un élément de la branche 2 de la monture de lunettes 5. Le premier élément peut être une partie de la face avant 3 de la monture de lunettes 5 ou être un élément rapporté ou fixé sur le reste de la face avant, notamment monté serré sur le reste de la face avant ou collé sur le reste de la face avant. Le deuxième élément peut être une partie de la branche 2 de la monture de lunettes 5 ou être un élément rapporté ou fixé sur le reste de la branche de la monture de lunettes 5, notamment monté serré sur le reste de la branche de la monture de lunettes 5 ou collé sur le reste de la branche de la monture de lunettes 5.

Alternativement, dans une variante du mode de réalisation représenté, le premier élément est un élément de la branche de la monture de lunettes et le deuxième élément est un élément de la face avant de la monture de lunettes. Le deuxième élément peut être une partie de la face avant de la monture de lunettes ou être un élément rapporté ou fixé sur le reste de la face avant, notamment monté serré sur le reste de la face avant ou collé sur le reste de la face avant. Le premier élément peut être une partie de la branche de la monture de lunettes ou être un élément rapporté ou fixé sur le reste de la branche de la monture de lunettes, notamment monté serré sur le reste de la branche de la monture de lunettes ou collé sur le reste de la branche de la monture de lunettes.

Alternativement, dans un autre mode de réalisation non représenté, l'élément de liaison a une section polygonale, notamment carrée, et les première et deuxième ouvertures ont des sections polygonales, notamment carrées, similaires, de sorte que le dispositif de fixation peut réaliser ou constituer une liaison encastrement ou une liaison complète entre les premier et deuxième éléments. Il peut en être de même, bien que l'élément de liaison et/ou les premier et deuxième éléments aient des sections circulaires, si les premier et deuxième éléments sont liés par une liaison glissière ou par une liaison pivot d'axe parallèle à l'axe A et distant de l'axe A, avant la mise en place de l'élément de liaison.

Alternativement, dans encore un autre mode de réalisation non représenté, le dispositif de fixation est tel que seul l'élément de liaison est aimanté ou présente une aimantation permanente et les premier et deuxième éléments sont des éléments magnétiques ne présentant pas d'aimantation permanente. Autrement dit, les premier et deuxième élément ont une nature telle qu'ils sont attirés par un aimant. L'élément de liaison est avantageusement un aimant.

Un mode d'exécution d'un procédé d'assemblage du dispositif de fixation est décrit ci-après.

Dans un premier temps, comme illustré sur la figure 4, on met en place l'élément de liaison 15 dans le premier élément 11. Autrement dit, on insère l'élément de liaison 15 au sein de la première ouverture ou alésage 13 en réalisant une translation, ou sensiblement une translation, illustrée par une flèche T sur la figure 4. Il est remarquable de constater que même dans cet état de montage partiel, l'élément de liaison 15 se trouve dans une configuration stable qui limite considérablement les risques de perte d'un élément du dispositif de fixation.

On procède ensuite à la mise en place du deuxième élément 12 contre le premier élément 11 de sorte à aligner ou aligner sensiblement l'axe de la première ouverture 13 avec l'axe de la deuxième ouverture 14. Sous l'effet de forces magnétiques, l'élément de liaison 15 se déplace en pénétrant au sein de la deuxième ouverture ou alésage 14, lorsque la deuxième ouverture 14 se trouve en vis-à-vis de la première ouverture 13. Ainsi, les différents éléments 11, 12, 13, 14, 15 sont agencés de sorte que, sous l'effet de forces magnétiques, l'élément de liaison 15 se déplace en pénétrant au sein de la deuxième ouverture ou alésage 14, lorsque la deuxième ouverture 14 se trouve en vis-à-vis de la première ouverture 13.

Alternativement, dans un premier temps, on procède à la mise en place du deuxième élément 12 contre le premier élément 11 de sorte à aligner, ou aligner sensiblement, l'axe de la première ouverture 13 avec l'axe de la deuxième ouverture 14. On débute l'introduction de l'élément de liaison 15 au sein de la première ouverture 13. Sous l'effet de forces magnétiques, l'élément de liaison 15 se déplace en pénétrant davantage au sein de la première ouverture 13, puis au sein de la deuxième ouverture 14 dès que celle-ci se trouve en vis-à-vis de la première ouverture 13. En effet, comme illustré en particulier sur la figure 3, si l'élément 11 comprend un aimant permanent 11' et que l'élément de liaison 15 est un aimant permanent, et que leurs pôles N (Nord) et S (Sud) sont disposés de façon opposée, les forces magnétiques vont engendrer le déplacement suivant la flèche T, parallèlement ou sensiblement parallèlement à l'axe A, de l'élément de liaison 15.

A l'issue du procédé de montage, on obtient, dans le cas d'un élément de liaison 15 et d'ouvertures 13, 14 de type alésages, un dispositif de fixation de type liaison pivot d'axe A ou sensiblement d'axe A. L'élément 11 étant, ou étant fixé à, une face avant de monture de lunettes, et l'élément 12 étant, ou étant fixé à, une branche 2 de monture de lunettes, on obtient une liaison pivot entre la branche 2 et la face avant 3 de monture. En ménageant un ou des ergots ou butées ou saillies sur la branche 2 et/ou sur la face avant 3, l'amplitude de pivotement est limitée, de préférence à un angle de l'ordre de 90 degrés. Ainsi, on obtient une charnière d'axe A ou sensiblement d'axe A.

Ainsi, les différents éléments 11, 12, 13, 14, 15 sont agencés de sorte que les efforts magnétiques s'exercent directement sur l'élément de liaison 15 et/ou de sorte que les efforts magnétiques permettent de déplacer l'élément de liaison 15 relativement aux premier et deuxième éléments. Autrement dit, les différents éléments 11, 12, 13, 14, 15 sont agencés de sorte que l'élément de liaison 15 est déplaçable dans les premier et deuxième éléments, notamment entre une position de non-verrouillage d'une branche et une position de verrouillage de cette branche. En particulier, les différents éléments 11, 12, 13, 14, 15 sont agencés de sorte que, lorsqu'on aligne les première et deuxième ouvertures, les efforts magnétiques agissent, notamment agissent directement, sur l'élément de liaison 15 et déplacent, en particulier déplacent selon l'axe A, l'élément de liaison 15 relativement aux premier et deuxième éléments. Ce déplacement a de préférence lieu alors que les premier et deuxième éléments sont immobiles ou sensiblement immobiles l'un par rapport à l'autre.

Un mode d'exécution d'un procédé de démontage du dispositif de fixation est décrit ci-après.

Dans un premier temps, on met en place un outil de démontage magnétique sur le premier élément 11 ou à proximité du premier élément 11. Par « outil de démontage », on entend un objet aimanté, par exemple un aimant, ou un objet magnétique. Du fait de l'effet des forces magnétiques entre l'outil de démontage et l'élément de liaison 15, l'élément de liaison 15 est attiré selon la direction T, dans le sens opposé à la flèche. L'élément de liaison 15 se déplace. A un moment, l'élément de liaison quitte la deuxième ouverture 14 du deuxième élément 12. On peut alors procéder à la séparation du premier élément 11 du deuxième élément 12. Ainsi, on procède à la séparation de la branche 2 de la face avant 3. L'outil peut être aimanté ou présenter des caractéristiques magnétiques juste suffisantes pour retirer partiellement l'élément de liaison 15, puis permettre un retrait par préhension à l'aide d'un autre outil par exemple. Alternativement, l'outil peut être aimanté ou présenter des caractéristiques magnétiques permettant d'attirer magnétiquement l'élément de liaison 15 de sorte à le retirer complètement des ouvertures 13 et 14. L'outil de démontage permet de vaincre les efforts magnétiques rappelant l'élément de liaison 15 dans une position de verrouillage de la branche et donc d'amener ensuite l'élément de liaison 15 dans une position de non-verrouillage de la branche permettant le démontage.

La solution est peu encombrante et a une faible masse. Grâce aux effets des forces magnétiques, l'élément de liaison 15 de la charnière reste logé dans les première et deuxième ouvertures 13, 14, même en cas de chocs ou manipulations brutales de la paire de lunettes. Le risque de séparation intempestive de l'élément de liaison 15 de la face avant 3 est extrêmement faible, voire nul. Ainsi, l'élément de liaison 15 ne peut pas être égaré ce qui rend la liaison de type charnière fiable et durable. La solution ne requiert que peu de pièces ce qui la rend simple et économique.

En outre, la résistance de friction au mouvement des branches de lunettes peut être fiabilisé et rester très stable ou constant au fil du temps. Ce n'est pas le cas lorsqu'on réalise des charnières à vis.

Dans tout ce document, par « élément magnétique », nous entendons un élément présentant une aimantation permanente ou non permanente. Ceci inclut les éléments qui sont attirés par un aimant.

Dans tout ce document, par « élément aimanté », nous entendons un élément qui présente une aimantation permanente.

Dans tout ce document, par « aimant », nous entendons un aimant qui présente une aimantation permanente.

## Revendications

1. Dispositif de fixation (10) pour monture de lunettes (5), **caractérisé en ce qu'**il comprend :
- un premier élément (11) comprenant une première ouverture (13), le premier élément (11) étant aimanté,
- un deuxième élément (12) comprenant une deuxième ouverture (14), le deuxième élément (12) étant un élément magnétique, et
- un élément de liaison (15) logé dans la première ouverture et dans la deuxième ouverture (13, 14) de sorte à relier mécaniquement le premier élément (11) au deuxième élément (12), l'élément de liaison (15) étant un élément magnétique.

2. Dispositif de fixation (10) selon la revendication 1, **caractérisé en ce que** le dispositif de fixation (10) est une charnière (4), l'élément de liaison (15) étant un arbre cylindrique ou sensiblement cylindrique et/ou les première et deuxième ouvertures (13, 14) sont des orifices cylindriques ou sensiblement cylindriques de sorte à permettre le pivotement du premier élément (11) relativement au deuxième élément (12).

3. Dispositif de fixation (10) selon l'une des revendications précédentes, **caractérisé en ce que** le premier élément (11) comprend ou est un aimant permanent (11').

4. Dispositif de fixation (10) selon l'une des revendications précédentes, **caractérisé en ce que** le premier élément (11) a une forme annulaire, notamment une forme annulaire de révolution.

5. Dispositif de fixation (10) selon l'une des revendications précédentes, **caractérisé en ce que** l'élément de liaison (15) est un aimant permanent.

6. Dispositif de fixation (10) selon l'une des revendications précédentes, **caractérisé en ce que** :
- le premier élément (11) est un élément de face avant (3) d'une monture de lunettes (5) et le deuxième élément (12) est un élément de branche (2) d'une monture de lunettes (5), ou
**en ce que**
- le premier élément est un élément de branche d'une monture de lunettes et **en ce que** le deuxième élément est un élément de face avant d'une monture de lunettes.

7. Monture de lunettes (5) comprenant une face avant (3) et au moins une branche latérale (2), **caractérisée en ce que** l'au moins une branche latérale (2) est reliée mécaniquement à la face avant (3) par un dispositif de fixation (10) selon l'une des revendications précédentes.

8. Paire de lunettes (1), **caractérisée en ce qu'**elle comprend une monture de lunettes (5) selon la revendication précédente, et/ou un dispositif de fixation (10) selon l'une des revendications 1 à 6.

9. Procédé d'assemblage ou de montage d'un dispositif de fixation (10) selon l'une des revendications 1 à 6, **caractérisé en ce qu'**il comprend les étapes suivantes :
- mettre en place l'élément de liaison (15) dans le premier élément (11),
- mettre en place le deuxième élément (12) contre le premier élément (11),
l'élément de liaison (15) se déplaçant en pénétrant dans la deuxième ouverture (14), sous l'effet de forces magnétiques, lorsque la deuxième ouverture (14) se trouve en vis-à-vis de la première ouverture (13).

10. Procédé de démontage d'un dispositif de fixation (10) selon l'une des revendications 1 à 6, **caractérisé en ce qu'**il comprend les étapes suivantes :
- mettre en place un outil de démontage magnétique sur le premier élément (11) ou à proximité du premier élément (11) de sorte que sous l'effet de forces magnétiques, l'élément de liaison (15) se déplace hors du deuxième élément (12),
- séparer le premier élément (11) du deuxième élément (12).
